# EUROPEAN PATENT APPLICATION

(11) **EP 4 737 226 A1**
(43) Date of publication of application: **06.05.2026**
(21) Application number: 25213200.6
(22) Date of filing: 04.11.2025
(51) Int. Cl.: B60R 21/201, B60R 21/213

(54) **AIR CURTAIN DEVICE AND VEHICLE**

(30) Priority: 04.11.2024 CN 202422683796 U
(71) Applicant: Yanfeng International Automotive Technology Co., Ltd., Shanghai 201306 (CN)
(72) Inventor: ZHANG, Yongxin, Shanghai, 201306 (CN); WU, Yujie, Shanghai, 201306 (CN); LI, Bin, Shanghai, 201306 (CN); TANG, Zhongye, Shanghai, 201306 (CN)
(74) Representative: Colombo, Stefano Paolo

(57) **Abstract**

The present invention discloses an air curtain device and a vehicle, and relates to the technical field of a safety air curtain. The air curtain device comprises at least one mounting member (111), at least one wrapping member (112) and an air curtain module (12), wherein the mounting member is configured to be mounted to a vehicle body of a vehicle, and the wrapping member is provided with a first end (1121) and a second end (1122) opposite to each other, and a connecting portion (1123) located between the first end and the second end; the connecting portion is connected with the mounting member and the air curtain module respectively, and the first end is configured to be connected with the second end, so that the wrapping member wraps the air curtain module that is rolled and/or folded. The assembling process of the air curtain device provided by the present invention is simple and fast, and the wrapping form is stable and reliable.

## Description

### TECHNICAL FIELD

The present invention relates to the technical field of a safety air curtain, in particular to an air curtain device and a vehicle.

### BACKGROUND

In order to improve the passive safety protection capability, some vehicles are provided with a lateral protective air curtain, respectively. The air curtain in a storage state is wrapped and received between the roof rail and the ceiling through the wrapping assemblies. After excitation due to vehicle collision and other reasons, the air curtain is inflated by the gas generator to depart from the roof rail and unfold between a lateral structure of the vehicle and the occupant.

The wrapping assembly available in the market usually includes a mounting lug and a wrapping element, wherein the mounting lug is fixed on the roof rail, and the fixed end of the wrapping element is connected with the air curtain and the mounting lug into an integral structure. The free end is connected with the mounting lug after the air curtain is wound around a periphery of the air curtain, so as to wrap the air curtain.

In order to restrain the free end of the wrapping element, such wrapping assembly is provided with a complex mating structure on its mounting lug, which leads to a complicated and time-consuming connection process between the free end of the wrapping element and the mounting lug. Moreover, the complex mating structure which is likely to fail, is present with the problem of unstable wrapping form.

### SUMMARY

The present invention aims to provide an air curtain device, which has the characteristics of simple and fast assembling process and stable and reliable wrapping form.

Another object of the present invention is to provide a vehicle with stable and reliable protective performance.

The embodiment of the present invention provides a technical solution:

An air curtain device, comprising at least one mounting member, at least one wrapping member and an air curtain module, wherein the mounting member is configured to be mounted on a vehicle body of a vehicle, and the wrapping member has a first end and a second end opposite to each other, and a connecting portion located between the first end and the second end;

The connecting portion is connected with the mounting member and the air curtain module respectively, and the first end is configured to be connected with the second end so that the wrapping member wraps the air curtain module that is rolled and/or folded.

In an alternative embodiment, the air curtain module is located on one side of the wrapping member departing from the mounting member, and the wrapping member is crimped in a direction departing from the mounting member to wrap the air curtain module.

In an alternative embodiment, the wrapping member further has a first weakened tear line located between the connecting portion and the first end.

In an alternative embodiment, a distance between the connecting portion and the first end is greater than a distance between the connecting portion and the second end in a state where the wrapping member is flattened.

In an alternative embodiment, the air curtain device further comprises a connector connecting the first end and the second end and fixing them to the vehicle body in a state where the wrapping member wraps the air curtain module.

In an alternative embodiment, the first end has a first through hole, the second end has a second through hole, and the connector passes through the first through hole and the second through hole and is connected with the vehicle body.

In an alternative embodiment, the wrapping member further has a first weakened tear line located between the connecting portion and the first through hole.

In an alternative embodiment, a distance from the first through hole to an end edge of the first end is greater than a distance from the second through hole to an end edge of the second end in a state where the wrapping member is flattened.

In an alternative embodiment, the wrapping member further has a second weakened tear line located between the second through hole and an end edge of the second end, wherein one end of the second weakened tear line is directed to the second through hole and the other end thereof is directed to the end edge of the second end.

In an alternative embodiment, a distance from the first through hole to the connecting portion is greater than a distance from the second through hole to the connecting portion in a state where the wrapping member is flattened.

In an alternative embodiment, one end of the mounting member is connected with the connecting portion, and the other end opposite thereto is provided with a mounting hole;

Wherein the air curtain device further comprises a fixing member configured to pass through the mounting hole for connection with the vehicle body so as to mount the mounting member to the vehicle body.

In an alternative embodiment, the numbers of both the at least one mounting member and the at least one wrapping member are plural, the plurality of mounting members and the plurality of wrapping members are combined one by one to form a plurality of wrapping assemblies, and the plurality of wrapping assemblies are sequentially arranged at intervals on the air curtain module.

The embodiment of the present invention further provides a vehicle, comprising a vehicle body and the aforementioned air curtain device. The air curtain device comprises at least one mounting member, at least one wrapping member and an air curtain module, wherein the mounting member is configured to be mounted to the vehicle body, and the wrapping member is provided with a first end and a second end opposite to each other, and a connecting portion located between the first end and the second end; the connecting portion is connected with the mounting member and the air curtain module respectively, and the first end is configured to be connected with the second end, so that the wrapping member wraps the air curtain module that is rolled and/or folded.

Compared with the prior art, in the air curtain device provided by the present invention, the connecting portion on the wrapping member thereof connected with the mounting member and the air curtain module is located between both ends of the wrapping member, and the first end of the wrapping member is directly connected with the second end after bypassing a periphery of the air curtain module, so that the air curtain module is wrapped. It may be seen that, the air curtain device provided by the present invention eliminates a complicated separate connection between the wrapping member and the mounting member, so as to effectively reduce the assembling difficulty and greatly improve the assembling efficiency, and also avoid the problem of unstable wrapping form due to the fact that the mating structure on the mounting member is likely to fail. Therefore, the air curtain device provided by the present invention has the beneficial effects including that: the assembling process is simple and fast, and the wrapping form is stable and reliable.

### BRIEF DESCRIPTION OF THE DRAWINGS

In order to explain the technical solution of the embodiment of the present invention more explicitly, the accompanying drawings required to be used in the embodiment will be briefly introduced below. It should be understood that, the following accompanying drawings only show some embodiments of the present invention and therefore should not be regarded as defining the scope. For those of ordinary skill in the art, other related accompanying drawings may also be obtained according to these accompanying drawings on the premise that no inventive effort is involved.
Fig. 1 is a schematic structural view of an air curtain device provided by the embodiment of the present invention before completion of the assembling;
Fig. 2 is an enlarged schematic view of an area A in Fig. 1;
Fig. 3 is a schematic structural view of the wrapping assembly and the air curtain module in Fig. 1 before completion of the assembling;
Fig. 4 is a schematic structural view of the wrapping assembly and the air curtain module in Fig. 1 after completion of the assembling;
Fig. 5 is a schematic structural view of the mounting member in Fig. 2;
Fig. 6 is a schematic structural view of the wrapping member in Fig. 2;
Fig. 7 is a schematic structural view of the wrapping member provided by another embodiment;
Fig. 8 is a schematic structural view of the air curtain device shown in Fig. 1 in one state after activation;
Fig. 9 is a schematic structural view of the air curtain device shown in Fig. 1 in another state after activation.

Reference numerals: 10-air curtain device; 11-wrapping assembly; 111-mounting member; 1111-mounting hole; 112-wrapping member; 1121-first end; 1122-second end; 1123-connecting portion; 1124-first weakened tear line; 1125-first through hole; 1126-second through hole; 1127- second weakened tear line; 113-connector; 114-fixing member; 12-air curtain module; 20-vehicle body; 30-ceiling; 40-pillar.

### DETAILED DESCRIPTION

In order to make the object, technical solution, and advantages of the embodiment of the present invention more implicit, the technical solution in the embodiment of the present invention will be explicitly and completely described below in conjunction with the accompanying drawings in the embodiment of the present invention. Apparently, the embodiments described are some embodiments of the present application, rather than all of the embodiments. The components of the embodiments of the present invention generally described and shown in the accompanying drawings here may be arranged and designed in various different configurations.

Therefore, the following detailed description of the embodiments of the present invention provided in the accompanying drawings is not intended to limit the scope of the present invention for which protection is sought, but only represents selected embodiments of the present invention. On the basis of the embodiments of the present invention, all the other embodiments obtained by those skilled in the art shall fall into the protection scope of the present invention on the premise that no inventive effort is involved.

It should be noted that: similar reference numerals and letters present similar items in the following accompanying drawings, and therefore, once a certain item is defined in one accompanying drawing, a further definition and explanation thereof is not required in subsequent accompanying drawings.

In the description of the present invention, it is to be understood that, the orientation or position relationship indicated by the terms "upper", "lower", "inner", "outer", "left" and "right" which is based on the orientation or position relationship shown in the accompanying drawings, or the orientation or position relationship that the product of the present invention is commonly placed when used, or the orientation or position relationship that is commonly understood by those skilled in the art, is merely for facilitating describing the present invention and simplifying the description, rather than indicating or implying that the device or element referred thereto has to present a particular orientation, and be constructed and operated in a particular orientation, and thus cannot be understood as limiting the present invention.

In addition, the terms such as "first" and "second" which are only intended to distinguish the description, shall not be understood as indicating or implying relative importance.

In the description of the present invention, it is also to be noted that, unless otherwise specified and defined, the terms such as "arranged" and "connected" should be broadly understood. For example, "connected" may be fixed connection, detachable connection or integrated connection; may be mechanical connection or electrical connection; may be direct connection or indirect connection through an intermediate medium and may be communication inside two elements. For those of ordinary skill in the art, the specific meanings of the above-described terms in the present invention may be understood according to specific conditions.

In the following, specific embodiments of the present invention will be described in detail in conjunction with the accompanying drawings.

### Embodiments

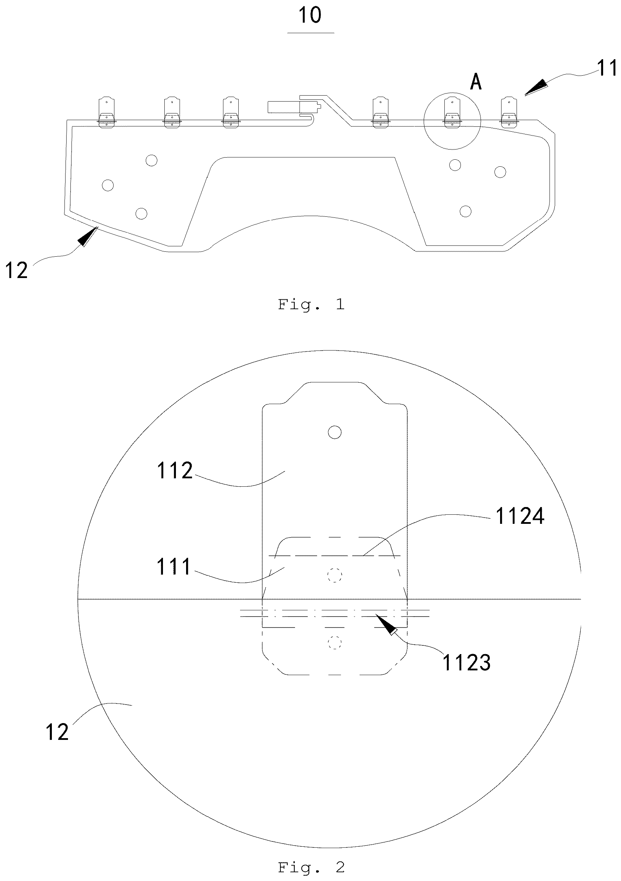

Reference may be made in conjunction with Figs. 1 and 2. Fig. 1 shows a schematic structural view of the air curtain device 10 provided by this embodiment before completion of the assembling, and Fig. 2 shows an enlarged schematic view of an area A in Fig. 1.

The air curtain device 10 provided in this embodiment comprises an air curtain module 12 and at least one wrapping assembly 11. The wrapping assembly 11 includes a mounting member 111 and a wrapping member 112, wherein the mounting member 111 is configured to be mounted on a vehicle body 20, specifically, on a roof rail, of the vehicle. The wrapping member 112 and the air curtain module 12 are both connected with the mounting member 111. The wrapping member 112 is configured to wrap the air curtain module 12 in a storage state. In the storage state, the air curtain module 12 which has not been inflated, may be rolled or folded, which shows such a state as to be conveniently received.

In fact, the air curtain device 10 may also comprise a gas generator, which is also mounted on the vehicle body 20 and connected with the air curtain module 12, and configured to inflate the air curtain module 12, so that the air curtain module 12 fractures the wrapping member 112 after expansion and unfold between the occupant of the vehicle and the lateral structure of the vehicle, thereby providing lateral impact protection for the occupant of the vehicle.

As shown in Fig. 1, the number of the at least on wrapping assembly 11 in this embodiment is plural, and the plurality of wrapping assemblies 11 are sequentially arranged on the air curtain module 12 at intervals, and may be sequentially arranged along one side edge of the air curtain module 12.

It may be understood that, a plurality of wrapping assemblies 11 in this embodiment are formed by combining a plurality of mounting members 111 and a plurality of wrapping members 112 one by one. During an actual assembling process, a plurality of wrapping members 112 corresponding to a plurality of wrapping assemblies 11 segmentally wrap and fix the air curtain module 12, and a plurality of corresponding mounting members 111 may be sequentially mounted at intervals along the roof rail.

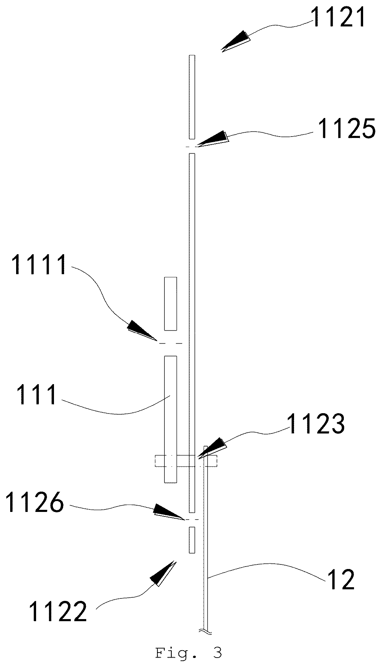

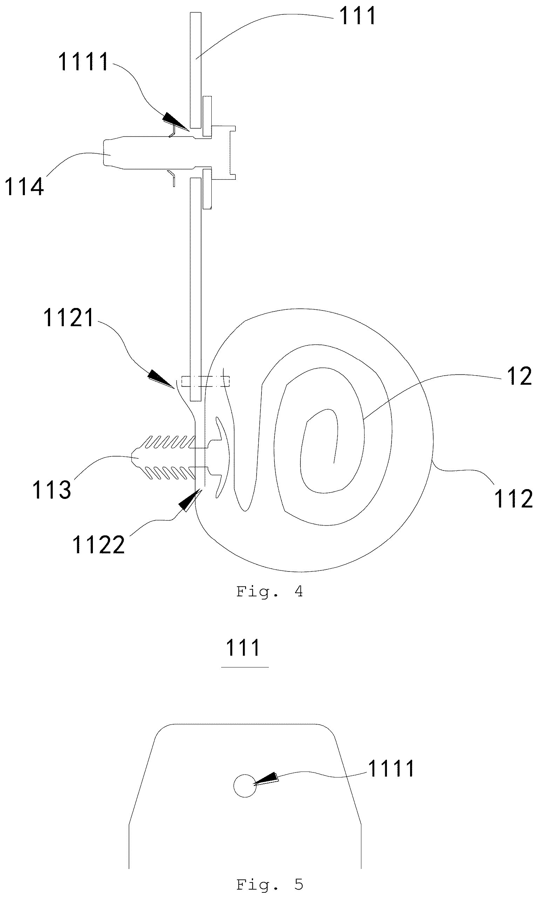

Reference may be made in conjunction with Figs. 3 and 4. Fig. 3 shows a schematic structural view of the wrapping assembly 11 and the air curtain module 12 before completion of the assembling, and Fig. 4 shows a schematic structural view of the wrapping assembly 11 and the air curtain module 12 after completion of the assembling.

In this embodiment, the wrapping member 112 has a first end 1121 and a second end 1122 opposite to each other, and a connecting portion 1123 between the first end 1121 and the second end 1122. The connecting portion 1123 is connected with the mounting member 111 and the air curtain module 12 respectively, and the first end 1121 is configured to be connected with the second end 1122, so that the wrapping member 112 wraps the air curtain module 12 that is rolled and/or folded.

The wrapping member 112 may be strip-like, and the first end 1121 and the second end 1122 are both ends of the wrapping member 112 in the length direction respectively. In the state shown in Fig. 3, the mounting member 111, the wrapping member 112 and the air curtain module 12 are sequentially stacked, and the mounting member 111 and the air curtain module 12 are located on opposite sides of the wrapping member 112 respectively, and the wrapping member 112 is crimped in a direction departing from the mounting member 111 to wrap the air curtain module 12, which shows a wrapped state shown in Fig. 4.

After rolling or folding treatment, the air curtain module 12 is still located on one side of the wrapping member 112 departing from the mounting member 111, and its overall structure is substantially located in the vicinity of the connecting portion 1123 of the wrapping member 112. In this state, the first end 1121 and the second end 1122 of the wrapping member 112 are connected after bypassing a periphery of the air curtain module 12, thereby the air curtain module 12 may be wrapped, and the air curtain module 12 may be restrained so as to remain in such a state as to be conveniently received.

It may be seen that, in this embodiment, after wrapping the air curtain module 12, both ends of the wrapping member 112 are connected with each other, so as to replace the connection between the free end of the wrapping member 112 and the mounting member 111 in the prior art, that is, the mounting member 111 eliminates an additional design of a mating structure, so as to simplify the assembling operation, greatly improve the assembling efficiency, and making the wrapping form after completion of the assembling stable and reliable.

It may be understood that, the first end 1121 may be located above the second end 1122, and the first end 1121 moves downwards and moves around the periphery of the air curtain module 12 to connect with the second end 1122 during the wrapping process. The first end 1121 may also be located below the second end 1122. During the wrapping process, the first end 1121 moves upwards and moves around the periphery of the air curtain module 12 to connect with the second end 1122.

It is to be noted that, during the process of wrapping the air curtain module 12, it is not limited that only the first end 1121 of the wrapping member 112 moves, the second end 1122 may also move in the opposite direction to the first end 1121 around the periphery of the air curtain module 12 so as to connect with each other. In this embodiment, the distance between the connecting portion 1123 and the first end 1121 is greater than the distance between the connecting portion 1123 and the second end 1122 in a state where the wrapping member 112 is flattened. In other words, at the periphery of the air curtain module 12, a longer wrapping size is provided between the connecting portion 1123 and the first end 1121.

In fact, the first end 1121 and the second end 1122 of the wrapping member 112 after connection are also required to be jointly fixed to the vehicle body 20, which may also be the roof rail. In order to avoid that the mounting member 111 blocks the fixing between the wrapping member 112 and the vehicle body 20, in this embodiment, the first end 1121 of the wrapping member 112 is located above the second end 1122 thereof in the state shown in Fig. 3, and the second end 1122 of the wrapping member 112 protrudes from the bottom end of the mounting member 111 in a state where the wrapping member 112 is flattened.

During actual assembling, after the first end 1121 and the second end 1122 of the wrapping member 112 are connected to wrap the air curtain module 12, the connection position of the first end 1121 and the second end 1122 is located below the mounting member 111, so that the first end 1121 and the second end 1122 may be smoothly fixed to the vehicle body without being blocked by the mounting member 111.

Reference may be made in conjunction with Fig. 5, which shows a schematic structural view of the mounting member 111.

Due to the fact that an additional design of a mating structure is eliminated, the mounting member 111 in this embodiment is simple in structure and sheet-like as a whole, and may be made of PET.

Specifically, one end of the mounting member 111 is connected with the connecting portion 1123 and the air curtain module 12, and the other end opposite thereto has a mounting hole 1111. The wrapping assembly 11 further comprises a fixing member 114 configured to pass through the mounting hole 1111 for connection with the vehicle body 20 so as to mount the mounting member 111 to the vehicle body 20, as shown in Fig. 3.

In Fig. 5, the bottom end of the mounting member 111 is sewed with the connecting portion 1123 and the air curtain module 12, and the mounting hole 1111 is substantially provided at an area in the vicinity of the top end of the mounting member 111. On the one hand, in order to ensure a reliable connection structure between the bottom end and the wrapping member 112, and on the other hand, in order to avoid that the top end occupies an excessive area of the vehicle body 20, in this embodiment, the width dimension of the bottom end of the mounting member 111 is larger than that of the top end thereof.

In the flattened state shown in Fig. 3, even if the size between the connecting portion 1123 and the first end 1121 of the wrapping member 112 is so large as to cover the mounting hole 1111, after the first end 1121 moves downwards to wrap the air curtain module 12 and connects with the second end 1122, the mounting hole 1111 may be opened so that the fixing member 114 may smoothly mount the mounting member 111 to the vehicle body 20.

In fact, in this embodiment, the fixing member 114 is a bolt which cooperates with a locking washer to mount and fix the mounting member 111 to the vehicle body 20, and the vehicle body 20 may be correspondingly provided with a threaded hole corresponding to the bolt. In other embodiments, other structural forms of fixing members 114, such as a snap-fit, may also be used according to actual application conditions.

As for the connection method of the mounting member 111, the wrapping member 112 and the air curtain module 12, sewing is preferred in this embodiment. In other words, the connecting portion 1123 of the wrapping member 112 has a sewing thread, and the sewing position of the air curtain module 12 is actually in its non-inflatable area.

In other embodiments, the connecting of the mounting member 111, the wrapping member 112 and the air curtain module 12 may also select other connection methods, for example, adhesion, according to actual application conditions.

The wrapping assembly 11 provided by this embodiment further includes a connector 113, wherein the connector 113 connects and fixes the first end 1121 and the second end 1122 to the vehicle body 20 in a state where the wrapping member 112 wraps the air curtain module 12.

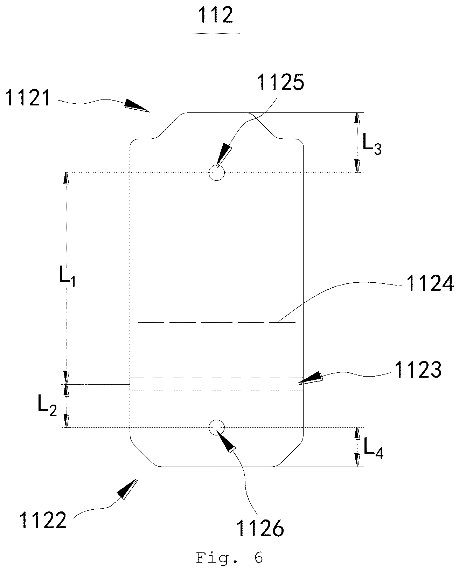

Reference may be made in conjunction with Fig. 6, which shows a schematic structural view of the wrapping member 112 in this embodiment.

In this embodiment, the wrapping member 112 is made of a flexible material, which may be non-woven fabric. The first end 1121 of the wrapping member 112 has a first through hole 1125, and the second end 1122 has a second through hole 1126. The connector 113 passes through the first through hole 1125 and the second through hole 1126, and is connected with the vehicle body 20.

During the actual assembling process, before wrapping the air curtain module 12, the connector 113 may first pass through the second through hole 1126 of the second end 1122 from one side where the air curtain module 12 is located, and the first through hole 1125 of the first end 1121 may be sleeved at the end where the connector 113 passes through the second through hole 1126 after the first end 1121 of the wrapping member 112 is wound around the periphery of the air curtain module 12, so that the first end 1121 and the second end 1122 of the wrapping member 112 are connected. Afterwards, the end of the connector 113 which passes through the first through hole 1125 cooperates with the vehicle, so that the wrapping member 112 may be separately fixed on the vehicle body 20.

In this embodiment, the connector 113 is a tree-like rivet, and the vehicle body 20 is provided with a corresponding insertion hole, which may be provided on the roof rail. In actual application, in the flattened state shown in Fig. 3, the distance between the mounting hole 1111 of the mounting member 111 and the second through hole 1126 of the wrapping member 112 is equal to that between the threaded hole and the insertion hole on the vehicle body 20. It may be understood that, the distance between the threaded hole and the insertion hole on the vehicle body 20 refers to the distance therebetween along the surface of the vehicle body 20.

During the mounting process, the air curtain module 12 may be firstly wrapped by the wrapping member 112, and the first end 1121 and the second end 1122 may be connected by the connector 113. After the wrapping form is fixed, the mounting member 111 may be mounted at the threaded hole on the vehicle body 20 by the fixing member 114, and the connector 113 may be directly inserted into the insertion hole on the vehicle body 20, so that the mounting process is convenient and fast.

In order to ensure that the wrapping member 112 may be rapidly fractured after the air curtain module 12 is inflated to expand and improve the collision protection performance, in this embodiment, the wrapping member 112 also has a first weakened tear line 1124 located between the connecting portion 1123 and the first end 1121. Specifically, the first weakened tear line 1124 is located between the connecting portion 1123 and the first through hole 1125.

It may be understood that, the first weakened tear line 1124 is actually a structure with weakened structural strength on the wrapping member 112, which produces the effect of guiding the wrapping member 112 to tear along its extension trajectory. In this embodiment, the first weakened tear line 1124 is formed by sequentially arranging a plurality of through holes in the wrapping member 112 at intervals along a straight-line direction. In other embodiments, the first weakened tear line 1124 may also be a structure with reduced thickness on the wrapping member 112.

Both ends of the first weakened tear line 1124 are directed to both sides of the wrapping member 112 in the width direction. In order to reduce the tear path and improve the unfolding efficiency of the air curtain module 12, it is preferable that the first weakened tear line 1124 extends along the width direction of the wrapping member 112, that is, the first weakened tear line 1124 is perpendicular to both sides of the wrapping member 112 in the width direction.

Please continue to refer to Fig. 6. In this embodiment, the distance from the first through hole 1125 to the connecting portion 1123 is greater than the distance from the second through hole 1126 to the connecting portion 1123 in a state where the wrapping member 112 is flattened. That is, L₁ is greater than L₂ in Fig. 6.

After the connector 113 passes through the second through hole 1126 in advance, the first end 1121 of the wrapping member 112 moves around the periphery of the air curtain module 12 to wrap the air curtain module 12, and then the first through hole 1125 is sleeved on the connector 113, which is equivalent to the connector 113 passing through the second through hole 1126. At the periphery of the air curtain module 12, compared with the length dimension between the connecting portion 1123 and the second through hole 1126, a longer wrapping size for the air curtain module 12 is provided between the connecting portion 1123 and the first through hole 1125.

Since a longer wrapping size is provided between the connecting portion 1123 and the first end 1121 at the periphery of the air curtain module 12, the first weakened tear line 1124 is arranged between the connecting portion 1123 and the first through hole 1125 in this embodiment, which ensures that the expanded air curtain module 12 is weakly hindered by the wrapping member 112 in a broken state after the wrapping member 112 is broken along the first weakened tear line 1124, so as to unfold rapidly.

It may be understood that, after the air curtain device 10 is activated, the wrapping member 112 is broken into two segments along the first weakened tear line 1124, wherein the segment where the first end 1121 is located is fixed to the vehicle body 20 by the connector 113, and the segment where the second end 1122 is located is fixed to the mounting member 111 by the connecting portion 1123.

It may be seen that, in this embodiment, by providing the first weakened tear line 1124, it is also possible to ensure that all the parts of the wrapping member 112 are effectively fixed after excitation, and accidents caused by debris splashing are avoided. In other embodiments, if the problem of debris splashing of the wrapping member 112 is not considered, a plurality of first weakened tear lines 1124 may also be provided between the connecting portion 1123 and the first through hole 1125 of the wrapping member 112 so as to further improve the unfolding efficiency of the air curtain module 12.

In actual application, after the air curtain device 10 is activated, the wrapping member 112 is subjected to an action force of the air curtain module 12, and the first end 1121 and the second end 1122 may both exert a pulling force on the connector 113, so that the two pulling forces are superimposed, and it is likely that the connector 113 is pulled out of the insertion hole on the vehicle body 20 and splashes in the occupant compartment. Since the connector 113 is usually made of a hard material, it is extremely likely to cause serious injury to the occupant during the splashing process.

In order to solve this problem, in this embodiment, in the flattened state shown in Fig. 6, the distance from the first through hole 1125 to an end edge of the first end 1121 is greater than the distance from the second through hole 1126 to an end edge of the second end 1122. That is, L₃ is greater than L₄ in Fig. 6.

Since the distance from the first through hole 1125 to the end edge of the first end 1121 is greater than the distance from the second through hole 1126 to the end edge of the second end 1122, the strength of the wrapping member 112 at the area between the first through hole 1125 and the end edge of the first end 1121 is higher than that at the area between the second through hole 1126 and the end edge of the second end 1122.

During the process that the air curtain module 12 expands and continuously exerts an action force on the wrapping member 112, since the strength at the area between the second through hole 1126 and the end edge of the second end 1122 is lower, so that the second through hole 1126 may be firstly torn by the connector 113. After the second through hole 1126 is torn, the second end 1122 is still fixed to the mounting member 111 through the connecting portion 1123, so that debris splashing does not occur.

Further, after the second through hole 1126 is torn, the space enclosed by the wrapping member 112 fails, and the action force exerted on the connector 113 by its first end 1121 through the first through hole 1125 instantaneously decreases, that is, the first through hole 1125 may not be torn, and the connector 113 remains fixed to the first end 1121.

It may be understood that, in the embodiment, if it is provided the other way round so that the distance from the first through hole 1125 to the end edge of the first end 1121 is smaller than the distance from the second through hole 1126 to the end edge of the second end 1122, that is, L₃ is smaller than L₄, then the strength of the area between the first through hole 1125 and the end edge of the first end 1121 is lower than that between the second through hole 1126 and the end edge of the second end 1122 so that the first through hole 1122 may be firstly torn by the connector 113. Further, after the first through hole 1122 is torn, since the first end 1121 is connected with the second end 1122 after bypassing the periphery of the air curtain module 12 and therefore farther from the connecting portion 1123, the first end 1121 itself and the debris generated by tearing may be thrown out rapidly, which may hurt the occupant. In addition, in the presence of the first weakened tear line 1124, if the first end 1121 is separated from the connector 113, a portion of the wrapping member 112 between the connector 113 and the first weakened tear line 1124 may be rapidly ejected after separation, which may hurt the occupant.

It is to be noted that, in this embodiment, after the air curtain device 10 is activated, the wrapping member 112 is present with two fracture positions, one of which is at the first weakened tear line 1124, and the other is between the second through hole 1126 and the end edge of the second end 1122. As for the temporal sequence of the fracture therebetween, this embodiment will not be defined.

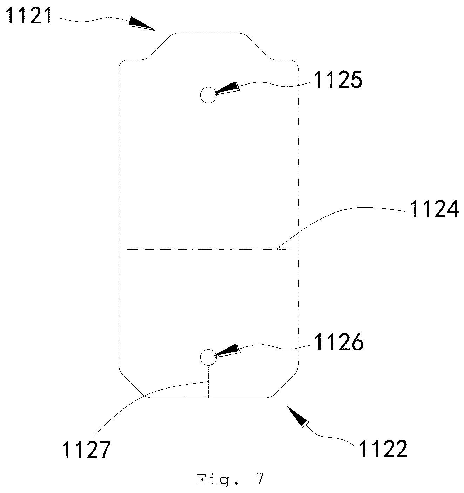

Moreover, in order to improve the tearing efficiency of the second through hole 1126, a structure for guiding the tearing may also be provided between the second through hole 1126 and the end edge of the second end 1122. Reference may be made in conjunction with Fig. 7, which shows a schematic structural view of the wrapping member 112 provided by another embodiment.

The wrapping member 112 provided by this embodiment is different from the present embodiment in that, a second weakened tear line 1127 located between the second through hole 1126 and the end edge of the second end 1122 is also provided, wherein one end of the second weakened tear line 1127 is directed to the second through hole 1126 and the other end is directed to the end edge of the second end 1122.

Similarly, in this embodiment, the second weakened tear line 1127 is formed by sequentially arranging a plurality of through holes in the wrapping member 112 at intervals along a straight line. In other embodiments, the second weakened tear line 1127 may also be a structure with reduced thickness on the wrapping member 112. Both ends of the second weakened tear line 1127 are directed to the second through hole 1126 and the end edge of the second end 1122 respectively, so as to guide the second through hole 1126 to be rapidly torn to the end edge of the second end 1122 under a small action force of the connector 113, thereby improving the reliability of preventing the connector 113 from splashing.

In order to reduce the tearing path, it is preferable that the second weakened tear line 1127 is perpendicular to the end edge of the second end 1122 and directed to the center of the second through hole 1126, and it is preferable that the second weakened tear line 1127 extends from the second through hole 1126 to the end edge of the second end 1122. In this embodiment, the end edge of the second end 1122 of the wrapping member 112 is perpendicular to its length direction, and the second through hole 1126 is arranged at a center position of the wrapping member 112 in the width direction, so that the second weakening line 1127 is located at a middle position of the wrapping member 112 in the width direction and extends along the length direction of the wrapping member 112.

It may be understood that, in this embodiment, since the effect of guiding a tearing trajectory of the second through hole 1126 has been produced by providing the second weakened tear line 1127, in this embodiment, the greatness relationship between the distance from the first through hole 1125 to the end edge of the first end 1121 and the distance from the second through hole 1126 to the end edge of the second end 1122 may not be limited.

It may also be understood that, as in the solution shown in Fig. 6, in this embodiment, during the process that the air curtain module 12 expands and continuously exerts an action force on the wrapping member 112, since the strength at the area between the second through hole 1126 and the end edge of the second end 1122 is lower based on the second weakened tear line 1127, so that the second through hole 1126 may be firstly torn by the connector 113. After the second through hole 1126 is torn, the second end 1122 is still fixed to the mounting member 111 through the connecting portion 1123, so that debris splashing does not occur.

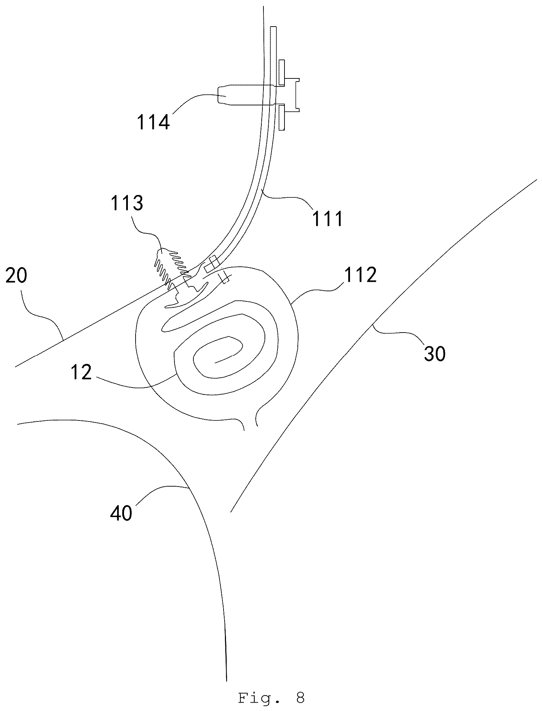

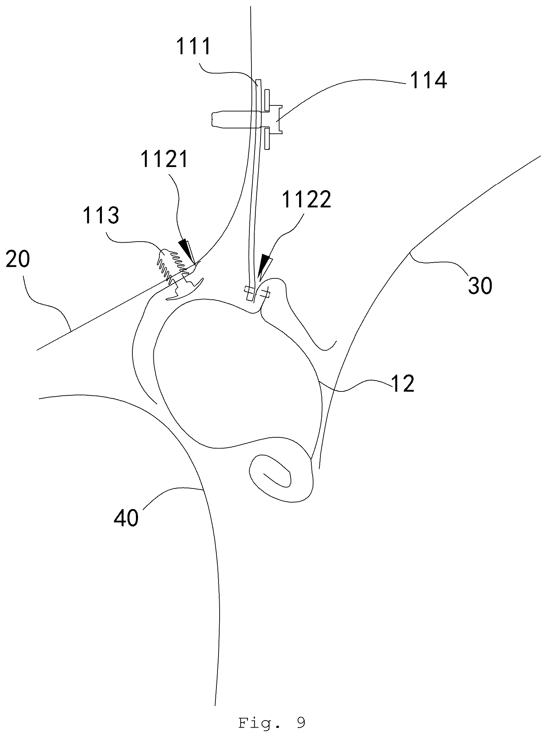

Reference may be made in conjunction with Figs. 8 and 9. Fig. 8 is a schematic structural view of the air curtain device 10 in one state after activation, and Fig. 9 is a schematic structural view of the air curtain device 10 in another state after activation.

In actual application, the air curtain device 10 provided by this embodiment is mounted on the vehicle body 20, which may be a roof rail, through a plurality of wrapping assemblies 11. Specifically, the vehicle body 20 is provided with threaded holes and insertion holes respectively, the fixing members 114 are threaded fit with the threaded holes respectively, and the connectors 113 are spliced with the insertion holes respectively. After completion of the installation, the air curtain device 10 is located in the space between the vehicle body 20, the ceiling 30 and the pillar 40, and the pillar 40 is usually located between the front window and the rear window.

In the case such as vehicle collision, the air curtain device 10 is activated, and the air curtain module 12 in the storage state is rapidly inflated by the gas generator, so that the air curtain module 12 rapidly expands and presses each wrapping member 112 from the inside out. Fig. 8 shows a schematic structural view of the air curtain module 12 in an initial stage of expansion. After the wrapping member 112 is pressed, the first weakened tear line 1124 thereof between the connecting portion 1123 and the first through hole 1125 is torn under tension, and the second through hole 1126 is torn by the connector 113. The time interval between the two tears is extremely short.

After the wrapping member 112 is torn at two positions, its structure is divided into two parts. The part where the first end 1121 is located is fixed on the vehicle body 20 by the connector 113, and the part where the second end 1122 is located is fixed on the mounting member 111 through the connecting portion 1123, while the mounting member 111 remains mounted on the vehicle body 20, so that debris splashing does not occur after activation of the air curtain device 10.

Fig. 9 shows a schematic structural view of the air curtain module 12 in a later stage of expansion. After the wrapping member 112 is torn, the air curtain module 12 pushes open the ceiling 30 of the vehicle and unfolds downwards from the inside of the pillar 40 during the continuously expanding process. After the air curtain module 12 is fully unfolded, it is suspended between the lateral structure inside the vehicle and the occupant through the plurality of wrapping assemblies 11, so as to cushion the impact between the occupant and the lateral structure of the vehicle and produce the collision protection effect.

To sum up, in the air curtain device 10 provided by this embodiment, after wrapping the air curtain module 12, both ends of the wrapping member 112 thereof are connected with each other to fix the wrapping form, which replaces the prior art that the free end of the wrapping member 112 is connected with the mounting member 111, and avoids a complicated mating structure provided on the mounting member 111 and a complicated connection operation between the wrapping member 112 and the mating structure, so that the assembling operation of the air curtain device 10 is greatly simplified and the assembling efficiency is greatly improved. Moreover, since the connection with the mating structure on the mounting member 111 is eliminated, the wrapping form is stable and reliable after completion of the assembling.

Moreover, the first weakened tear line 1124 is provided on the wrapping member 112 so as to greatly improve the tearing efficiency of the wrapping member 112, enhance the response speed with a more stable and reliable protection effect, and prevents the debris splashing of the wrapping member 112. In addition, by weakening the strength of the area between the second through hole 1126 and the end edge of the second end 1122, it is ensured that the second through hole 1126 may be rapidly torn by the connector 113 at an initial stage of collision of the air curtain module 12, so that a pulling force exerted by the wrapping member 112 on the connector 113 may be instantaneously released so as to avoid the splashing of the connector 113 in the occupant compartment.

Therefore, the air curtain device 10 provided by this embodiment has the characteristics of simple and fast assembling process, stable and reliable wrapping form, higher safety and better collision protection effect.

In addition, this embodiment further provides a vehicle, comprising a vehicle body 20 and the aforementioned air curtain device 10. The mounting member 111 of the air curtain device 10 is mounted on the vehicle body 20 through the fixing member 114, and the first end 1121 and the second end 1122 of the wrapping member 112 are connected to the vehicle body 20 through the connector 113. The air curtain device 10 is located in the space between the vehicle body 20, the ceiling 30 and the pillar 40. In fact, the vehicle body 20 is also provided with a gas generator, which is connected with the air curtain module 12.

In the case such as vehicle collision, the air curtain module 12 in the storage state is rapidly inflated by the gas generator, so that the air curtain module 12 rapidly expands and presses the wrapping member 112 from the inside out. After the wrapping member 112 is torn, the air curtain module 12 pushes open the ceiling 30 of the vehicle and unfolds downwards from the inside of the pillar 40 during the continuously expanding process. After the air curtain module 12 is fully unfolded, it is suspended between the lateral structure inside the vehicle and the occupant through the plurality of wrapping assemblies 11, so as to cushion the impact between the occupant and the lateral structure of the vehicle and produce the collision protection effect.

Benefiting from the beneficial effects of the air curtain device 10 provided by this embodiment, the vehicle provided by this embodiment has the characteristics of higher safety and better collision protection effect.

The above description which is only a preferred embodiment of the present invention, is not intended to limit the present invention. For those skilled in the art, various modifications and changes may be made in the present invention. Any amendment, equivalent replacement, improvement, and the like made within the spirit and principles of the present invention should all be contained within the protection scope of the present invention.

## Claims

1. An air curtain device, **characterized by** comprising at least one mounting member (111), at least one wrapping member (112) and an air curtain module (12), wherein the mounting member (111) is configured to be mounted on a vehicle body (20) of a vehicle, and the wrapping member (112) has a first end (1121) and a second end (1122) opposite to each other, and a connecting portion (1123) located between the first end (1121) and the second end (1122);
wherein the connecting portion (1123) is connected with the mounting member (111) and the air curtain module (12) respectively, and the first end (1121) is configured to be connected with the second end (1122) so that the wrapping member (112) wraps the air curtain module (12) that is rolled and/or folded.

2. The air curtain device according to claim 1, **characterized in that** the air curtain module (12) is located on one side of the wrapping member (112) departing from the mounting member (111), and the wrapping member (112) is crimped in a direction departing from the mounting member (111) to wrap the air curtain module (12).

3. The air curtain device according to any of the preceding claims, **characterized in that** the wrapping member (112) further has a first weakened tear line (1124) located between the connecting portion (1123) and the first end (1121).

4. The air curtain device according to any of the preceding claims, **characterized in that** a distance between the connecting portion (1123) and the first end (1121) is greater than a distance between the connecting portion (1123) and the second end (1122) in a state where the wrapping member (112) is flattened.

5. The air curtain device according to any of the preceding claims, **characterized in that** the air curtain device (10) further comprises a connector (113) connecting the first end (1121) and the second end (1121) and fixing them to the vehicle body (20) in a state where the wrapping member (112) wraps the air curtain module (12).

6. The air curtain device according to claim 5, **characterized in that** the first end (1121) has a first through hole (1125), the second end (1122) has a second through hole (1126), and the connector (113) passes through the first through hole (1125) and the second through hole (1126) and is connected with the vehicle body (20).

7. The air curtain device according to claim 6, **characterized in that** the wrapping member (112) further has a first weakened tear line (1124) located between the connecting portion (1123) and the first through hole (1125).

8. The air curtain device according to claim 6 or 7, **characterized in that** a distance from the first through hole (1125) to an end edge of the first end (1121) is greater than a distance from the second through hole (1126) to an end edge of the second end (1122) in a state where the wrapping member (112) is flattened.

9. The air curtain device according to any of claims 6 to 8, **characterized in that** the wrapping member (112) further has a second weakened tear line (1127) located between the second through hole (1126) and an end edge of the second end (1122), wherein one end of the second weakened tear line (1127) is directed to the second through hole (1126) and the other end thereof is directed to the end edge of the second end (1122).

10. The air curtain device according to any of claims 6 to 9, **characterized in that** a distance from the first through hole (1125) to the connecting portion (1123) is greater than a distance from the second through hole (1126) to the connecting portion (1123) in a state where the wrapping member (112) is flattened.

11. The air curtain device according to any of the preceding claims, **characterized in that** one end of the mounting member (111) is connected with the connecting portion (1123), and the other end opposite thereto is provided with a mounting hole (1111);
wherein the air curtain device (10) further comprises a fixing member (114) configured to pass through the mounting hole (1111) for connection with the vehicle body (20) so as to mount the mounting member (111) to the vehicle body (20).

12. The air curtain device according to any of the preceding claims, **characterized in that** the numbers of both the at least one mounting member (111) and the at least one wrapping member (112) are plural, the plurality of mounting members (111) and the plurality of wrapping members (112) are combined one by one to form a plurality of wrapping assemblies (11), and the plurality of wrapping assemblies (11) are sequentially arranged at intervals on the air curtain module (12).

13. The air curtain device according to any of the preceding claims, **characterized in that** the connecting portion (1123) is sewed with the mounting member (111) and the air curtain module (12) respectively.

14. The air curtain device according to any of the preceding claims, **characterized in that** the first end (1121) is configured to be connected to the second end (1122) after bypassing a periphery of the air curtain module (12).

15. A vehicle, **characterized by** comprising a vehicle body (20) and an air curtain device (10) according to any of claims 1 to 14, wherein the mounting member (111) is mounted on the vehicle body (20) .
